# NEUE EUROPÄISCHE PATENTSCHRIFT

(11) **EP 1 582 250 B2**
(45) Veröffentlichungstag und Bekanntmachung des Hinweises auf die Entscheidung über den Einspruch: **09.03.2022**
(45) Hinweis auf die Patenterteilung: 15.05.2013
(21) Anmeldenummer: 05005035.0
(22) Anmeldetag: 08.03.2005
(51) Int. Cl.: B01D 53/14

(54) **Absorptionsmittel mit verbesserter Oxidationsbeständigkeit und Verfahren zum Entsäuern von Fluidströmen**
Absorbent with improved oxidation resistance and process for deacidifying fluid fluxes
Absorbant avec une résistance améliorée à l'oxydation et procédé pour désacidifier des courants de fluides

(30) Priorität: 09.03.2004 DE 102004011427
(43) Veröffentlichungstag der Anmeldung: 05.10.2005
(73) Patentinhaber: BASF SE, 67056 Ludwigshafen am Rhein (DE)
(72) Erfinder: Asprion, Norbert, 68163 Mannheim (DE); Höfer, Frank, 67071 Ludwigshafen (DE); Clausen, Iven, 68199 Mannheim (DE); Hasse, Hans, 67661 Kaiserslautern (DE)

(56) Entgegenhaltungen:
- CN-A- 1 076 380
- DE-A1- 3 714 209
- US-A- 3 137 654
- US-A- 4 605 743
- C.H. Blachly, H. Ravner, J.Chem.Eng.Data 11 (1966) 401-403
- Developments in polymer stabilisation-5, Gerald Scott; Chapter 3: Antioxidant action of sterically hindered amines and related compounds, V.Ya. Shlyapintokh und V.B. Ivanov; Seiten 41-70 Applied Science Publishers, 1982

## Beschreibung

Die vorliegende Erfindung betrifft ein Absorptionsmittel zum Entsäuern eines Fluidstroms, der Sauergase als Verunreinigungen enthält, und ein Verfahren unter Verwendung des Absorptionsmittels.

In zahlreichen Prozessen in der chemischen Industrie treten Fluidströme auf, die Sauergase, wie z. B. CO₂, H₂S, SO₂, CS₂, HCN, COS, Disulfide oder Mercaptane als Verunreinigungen enthalten. Bei diesen Fluidströmen kann es sich beispielsweise um Gasströme, wie Erdgas, Synthesegas, Raffineriegas, oder Reaktionsgase handeln, die bei der Oxidation organischer Materialien, wie beispielsweise organischer Abfälle, Kohle, Erdgas oder Erdöl, oder bei der Kompostierung organische Substanzen enthaltender Abfallstoffe entstehen.

Die Entfernung der Sauergase ist aus unterschiedlichen Gründen von besonderer Bedeutung. Beispielsweise muss der Gehalt an Schwefelverbindungen von Erdgas durch geeignete Aufbereitungsmaßnahmen unmittelbar an der Erdgasquelle reduziert werden, denn auch die Schwefelverbindungen bilden mit dem vom Erdgas häufig mitgeführten Wasser Säuren, die korrosiv wirken. Für den Transport des Erdgases in einer Pipeline müssen daher vorgegebene Grenzwerte der schwefelhaltigen Verunreinigungen eingehalten werden. Aus den bei der Oxidation organischer Materialien entstehenden Reaktionsgasen müssen die Sauergase entfernt werden, um die Emission von Gasen zu verhindern, die die Natur schädigen oder das Klima beeinflussen können.
Im industriellen Maßstab werden häufig wässrige Lösungen organischer Basen, z. B. Alkanolamine, als Absorptionsmittel eingesetzt. Beim Lösen von Sauergasen bilden sich dabei aus der Base und den Sauergasbestandteilen ionische Produkte. Das Absorptionsmittel kann durch Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden. Bevorzugte, beim Entfernen von Sauergasverunreinigungen aus Kohlenwasserstoffgasströmen verwendete Alkanolamine umfassen Monoethanolamin (MEA), Diethanolamin (DEA), Triethanolamin (TEA), Diethylethanolamin (DEEA), Diisopropylamin (DIPA), Aminoethoxyethanol (AEE) und Methyldiethanolamin (MDEA).

Die bekannten Absorptionsmittel eignen sich sehr gut zum Entsäuern von Kohlenwasserstoffströmen, wie Erdgas. Bestimmte Probleme treten bei der Behandlung sauerstoffhaltiger stoffhaltiger Fluide, z. B. von Rauchgasen, auf. Hierbei verschlechtert sich die Absorptionsfähigkeit des Absorptionsmittels langfristig und wird bei der Regeneration nicht vollständig wiedererlangt. Vermutlich ist die Gegenwart von molekularem Sauerstoff für eine oxidative Zersetzung der im Absorptionsmittel enthaltenen Amine verantwortlich.

Die US-A 3,137,654 schlägt vor, dem Absorptionsmittel Komplexbildner, wie N,N-Dihydroxyethylglycin, N-Hydroxyethylethylendiamintriessigsäure-Natriumsalz oder Ethylendiamintetraessigsäure-Natriumsalz, zuzusetzen, um den oxidativen Abbau des Absorptionsmittels zu verlangsamen.

Die US-A 4,440,731 lehrt, dem Absorptionsmittel zur Stabilisierung mehr als 50 ppm Cu²⁺-Ionen, gegebenenfalls im Gemisch mit Dihydroxyethylglycin, einem Alkalicarbonat, einem Alkali- oder Ammoniumpermanganat und Nickel- und/oder Bismuthoxid, zuzusetzen.

Es ist bekannt, so genannte Antioxidantien zur Stabilisierung unbelebter organischer Materialien, wie Formmassen oder Anstrichmittel, gegen die Einwirkung von Sauerstoff, Licht und/oder Wärme zu verwenden. Die Wirkungsweise der Antioxidantien beruht darauf, dass der Propagierungsschritt einer radikalisch induzierten Peroxidationsreaktion unterbrochen wird, z. B. indem das Antioxidans ein H-Atom auf das intermediäre Peroxyradikal überträgt. Viele Antioxidantien wirken außerdem als Reduktionsmittel. Der Einsatz von Antioxidantien zur Stabilisierung von flüssigen Absorptionsmitteln wurde bislang nicht in Erwägung gezogen, da der Fachmann beim innigen und intensiven Kontakt des Absorptionsmittel mit sauerstoffhaltigen Fluiden eine direkte Reaktion des Antioxidans mit dem Sauerstoff erwarten würde, wobei das Antioxidans verbraucht würde, ohne eine stabilisierende Wirkung zu entfalten.

Die DE 37 14 209 lehrt ein Verfahren zur selektiven Entfernung von Schwefeldioxid und anschließender Reindarstellung von Schwefeldioxid aus Rauchgas. Zur Absorption wird ein Gemisch aus tertiärem Amin mit Lösemittel eingesetzt. Zum Aminlösemittelgemisch werden Antioxidantien als Stabilisatoren additiviert. Zu den Antioxidantien zählen Trialkylphenole, Bisphenole, Diphenylamine, alkylierte Diphenylamine, alkylierte Phenothiazine.

Der Erfindung liegt die Aufgabe zu Grunde, ein Absorptionsmittel und ein Verfahren zum Entsäuern von Fluidströmen anzugeben, wobei die Absorptionsfähigkeit des Absorptionsmittels langfristig erhalten bleibt.

Die Aufgabe wird gelöst durch ein Absorptionsmittel, das wenigstens ein aliphatisches Amin und wenigstens ein nicht-hydrochinoides Antioxidans umfasst, wobei das Antioxidans ausgewählt ist unter Hydrochinonmonoether und -ester, hydroxylierten Thio diphenylethern, Benzylphosphonaten, Estern der β-(3,5-Di-tert-butyl-4-hydroxyphenyl)-propionsäure mit ein- oder mehrwertigen Alkoholen, 2-(2'-Hydroxyphenyl)-benzotriazolen, Nitroxylradikalen, den weiter unten genannten Borverbindungen und Gemischen davon.

Die Erfindung betrifft außerdem ein Verfahren zum Entsäuern eines Fluidstroms, bei dem man in wenigstens einem Absorptionsschritt den Fluidstrom mit einem vorstehend definierten Absorptionsmittel in innigen Kontakt bringt.

Die Sauerstoffaufnahme des erfindungsgemäßen Absorptionsmittels ist geringer als die eines Vergleichsabsorptionsmittels identischer Zusammensetzung, das jedoch kein Antioxidans enthält. Unter der "Sauerstoffaufnahme" des Absorptionsmittels wird das Volumen an Sauerstoff verstanden, das durch Reaktion mit dem Absorptionsmittel verbraucht wird. Sie kann leicht durch Messung der Volumenänderung eines abgeschlossenen Systems, das eine bestimmte Menge Absorptionsmittel und eine bestimmte Menge eines sauerstoffhaltigen Gases enthält, unter isobaren Bedingungen oder der Druckänderung des abgeschlossenen Systems unter isochoren Bedingungen ermittelt werden. Bei einem geeigneten Test wird über die Dauer von 200 Stunden Luft durch Rühren in Form von Gasblasen in das zu testende Absorptionsmittel bei 25 °C und 1000 mbar eingetragen. Bevorzugte Absorptionsmittel weisen unter diesen Bedingungen eine Sauerstoffaufnahme auf, die wenigstens 5 %, vorzugsweise wenigstens 10 % und insbesondere wenigstens 15 % geringer ist als die eines Vergleichsabsorptionsmittels identischer Zusammensetzung jedoch ohne Antioxidans.

"Entsäuern" bedeutet die vollständige oder teilweise Entfernung von Sauergasen und/oder deren Vorläuferverbindungen, wie z. B. CO₂, H₂S, SO₂, CS₂, HCN, COS, Disulfiden oder Mercaptanen, aus dem Fluidstrom.

Das Absorptionsmittel und Verfahren eignen sich insbesondere zum Entsäuern von sauerstoffhaltigen Fluidströmen, die z. B. 1 bis 80 Vol.-%, meist 2 bis 20 Vol.-%, Sauerstoff enthalten.

Bei dem sauerstoffhaltigen Fluidstrom handelt es sich im Allgemeinen um einen Gasstrom, der auf folgende Weise gebildet wird:
1. a) Oxidation organischer Substanzen z. B. Rauchgase (flue gas),
2. b) Kompostierung und Lagerung organische Substanzen enthaltender Abfallstoffe, oder
3. c) bakterielle Zersetzung organischer Substanzen.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organische Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Daneben kann das erfindungsgemäße Verfahren natürlich auch angewendet werden, um unverbrannte fossile Gase, wie Erdgas, z. B. so genannte Coal-seam-Gase, d. h. bei der Förderung von Kohle anfallende Gase; die gesammelt und komprimiert werden, zu behandeln.

Im Allgemeinen enthalten diese Gasströme bei Normalbedingungen weniger als 50 mg/m³ Schwefeldioxid.

Die Ausgangsgase können entweder den Druck aufweisen, der etwa dem Druck der Umgebungsluft entspricht, also z. B. Normaldruck oder einen Druck der vom Normaldruck um bis zu 0,2 bar abweicht. Weiterhin können die Ausgangsgase einen höheren Druck als Normaldruck aufweisen, z. B. einen Druck bis 20 bar. Ausgangsgase mit einem höheren Druck werden gebildet, indem man Ausgangsgase mit einem Druck, der in der Nähe des Drucks der Umgebungsluft liegt, durch Kompression verdichtet oder das Ausgangsgas bei höherem Druck erzeugt z. B. durch Oxidation von organischen Substanzen mit komprimierter Luft. Der damit anfallende Volumenstrom des Gases verringert sich dadurch und zusätzlich erhöht sich der Partialdruck der abzutrennenden Sauergase, was für die Absorption und den dabei anfallenden Regenerationsbedarf vorteilhaft ist. Nachteilig sind zum einen der Kompressionsaufwand (Investition und Betriebskosten) und die evtl. zusätzlich anfallenden höheren Investionskosten aufgrund der Verwendung von Druckapparaten, so dass es hier ein Kostenoptimum gibt.

Als aliphatische Amine eignen sich solche, die üblicherweise zum Entsäuern von Fluidströmen verwendet werden, insbesondere
- primäre, sekundäre oder tertiäre Amine mit 4 bis 12 Kohlenstoffatomen,
- Alkanolamine mit 2 bis 12, vorzugsweise 4 bis 12 Kohlenstoffatomen,
- cyclische Amine mit einem 5-, 6- oder 7-gliedrigen gesättigten Ring, der ein Stickstoffatom und gegebenenfalls ein weiteres Heteroatom, insbesondere ein Sauerstoff- oder Stickstoffatom, enthält und deren Gemische.

Die aliphatischen Amine werden üblicherweise in Form ihrer wässrigen Lösungen mit einem Gesamtamingehalt von im Allgemeinen 10 bis 70 Gew.-%, vorzugsweise 25 bis 60 Gew.-%, eingesetzt. Die Lösungen können zusätzlich zu oder an Stelle von Wasser physikalische Lösungsmittel enthalten, die z. B. ausgewählt sind unter Cyclotetramethylensulfon (Sulfolan) und dessen Derivaten, aliphatischen Säureamiden (Acetylmorpholin, N-Formylmorpholin), N-alkylierten Pyrrolidonen und entsprechenden Piperidonen, wieN-Methylpyrrolidon (NMP), Propylencarbonat, Methanol, Dialkylethern von Polyethylenglykolen und Gemischen davon.

Bevorzugt sind Absorptionsmittel, die wenigstens ein Alkanolamin umfassen, insbesondere Monoethanolamin (MEA), Diethanolamin (DEA), Triethanolamin (TEA), Diethylethanolamin (DEEA), Diisopropylamin (DIPA), Aminoethoxyethanol (AEE) und Methyldiethanolamin (MDEA) und Gemische davon.

Ganz besonders bewährt hat sich das in dem US-Patent US 4,336,233 beschriebene Absorptionsmittel. Es handelt sich dabei um eine wässrige Lösung von Methyldiethanolamin (MDEA) und Piperazin als Absorptionsbeschleuniger oder Aktivator (aMDEA^{®}, BASF AG, Ludwigshafen). Die dort beschriebene Waschflüssigkeit enthält 1,5 bis 4,5 mol/l Methyldiethanolamin (MDEA) und 0,05 bis 0,8 mol/l, bevorzugt bis zu 0,4 mol/l Piperazin.

Die verwendeten Antioxidantien weisen keine hydrochinoide Struktur auf, d. h. sie verfügen nicht über o- oder p-ständig an einem aromatischen Ring angeordnete freie Hydroxylgruppen. Insbesondere o- und p-Hydrochinon und kernalkylierte Derivate davon sind ungeeignet, während die Monoether- oder -ester davon geeignet sind.

Als Antioxidantien eignen sich bestimmte Verbindungen, die in der Lage sind, den Propagierungsschritt einer von molekularem Sauerstoff induzierten Peroxidationsreaktion zu unterbrechen. Solche Verbindungen werden üblicherweise als Antioxidantien, UV-Absorber oder Peroxidzersetzer bezeichnet. Spezielle Beispiele sind folgende Verbindungen, die einzeln oder als Gemisch zweier oder mehrerer Verbindungen verwendet werden können:

Hydrochinonmonoether und -ester, z. B. 4-Methoxyphenol, 2,6-Di-tert-butyl-4-methoxyphenol, 2,6-Diphenyl-4-octadecyloxyphenol, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

Hydroxylierte Thiodiphenylether, z. B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec-amylphenol), 4,4'-Bis(2,6-dimethyl-4-hydroxyphenyl)-disulfid.

Benzylphosphonate, z. B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzyl-phosphonat, Ca-Salz des 3,5-Di-tert-butyl-4-hydroxybenzyl-phosphonsäure-mono-ethylesters.

Ester der β-(3,5-Di-tert-butyl-4-hydroxyphenyl)-propionsäure mit ein- oder mehrwertigen Alkoholen, wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl) isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

2-(2'-Hydroxyphenyl)-benzotriazole, wie z. B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)- benzotriazol, 2-(2'-Hydroxy-5'-(1,1,3,3-tetramethylbutyl)phenyl)-benzotriazol, 2-(3',5'-Di-tertbutyl-2-hydroxyphenyl)-5-chlor-benzotriazol, 2-(3'-tert-Butyl-2'-hydroxy-5'-methylphenyl)-5- chlor-benzotriazol, 2-(3'-sec-Butyl-5'-tert-butyl-2'-hydroxyphenyl)-benzotriazol, 2-(2 -Hydroxy- 4-octoxyphenyl)-benzotriazol, 2-(3,5-Di-tert-amyl-2-hydroxyphenyl)-benzotriazol, 2-(3,5- Bis(alpha, alpha -dimethylbenzyl)-2-hydroxyphenyl)-benzotriazol, 2-(3'-tert -utyl-2'-hydroxy 5, (2 octyloxycarbonylethyl)phenyl)-5-chlor-benzotriazol, 2-(3'-tert-Butyl-5,[2-(2-ethylhexyloxy)- carbonylethyl]-2-hydroxyphenyl)-5-chlor-benzotriazol, 2-(3'-tert-Butyl-2'-hydroxy-5-(2-methoxycarbonylethyl)phenyl)-5-chlor-benzotriazol, 2-(3'-tert-Butyl-2'-hydroxy-5'-(2-methoxy carbonylethyl)phenyl)-benzotriazol, 2-(3'-tert-Butyl-2'-hydroxy-5,(2-octyloxycarbonylethyl)-phenyl)-benzotriazol, 2-(3'-tert-Butyl-5'-[2-(2-ethylhexyloxy)carbonylethyl]-2-hydroxyphenyl)- benzotriazol, 2-(3'-Dodecyl-2'-hydroxy-5-methylphenyl)-benzotriazol, 2-(3'-tert-Butyl-2'-hydroxy-5'-(2-isooctyloxycarbonylethyl)phenyl-benzotnazol, 2,2'-Methylen-bis[4-(1,1,3,3-tetramethylbutyl)-6-benzotriazol-2-yl-phenol], Umesterungsprodukt von 2-[3-tert-Butyl-5'-(2-methoxycarbonylethyl)-2-hydroxy-phenyl]-benzotriazol mit Polyethylenglycol 300;

Nitroxylradikale wie z. B. 1-Oxyl-2,2,6,6-tetramethylpiperidin, 1-Oxyl-2,2,6,6-tetramethylpiperidin-4-ol, 1-Oxyl-2,2,6,6-tetramethylpiperidin-4-on, 1-Oxyl-2,2,6,6-tetramethylpiperidin-4-yl-acetat, 1-Oxyl-2,2,6,6-tetramethylpiperidin-4-yl-2-ethylhexanoat, 1-Oxyl-2,2,6,6-tetramethylpiperidin-4-yl-stearat, 1-Oxyl-2,2,6,6-tetramethylpiperidin-4-yl-benzoat, 1-Oxyl-2,2,6,6-tetramethylpiperidin-4-yl-(4-tert-butyl)benzoat, Bis(1-oxyl-2,2,6,6-tetramethylpiperidin-4-yl)-succinat, Bis(1-oxyl-2,2,6,6-tetramethylpiperidin-4-yl)-adipat, Bis(1-oxyl-2,2,6,6-tetramethylpiperidin-4-yl)-sebacat, Bis(1-oxyl-2,2,6,6-tetramethylpiperidin-4-yl)-n-butylmalonat, Bis(1-oxyl-2,2,6,6-tetramethylpiperidin-4-yl)-phthalat, Bis(1-oxyl-2,2,6,6-tetramethylpiperidin-4-yl)-isophthalat, Bis(1-oxyl-2,2,6,6-tetramethylpiperidin-4-yl)-terephthalat, Bis(1-oxyl-2,2,6,6-tetramethylpiperidin-4-yl)-hexyhydroterephthalat, N,N'-Bis(1-oxyl-2,2,6,6-tetramethylpiperidin-4-yl)-adipinamid, N-(1-Oxyl-2,2,6,6-tetramethylpiperidin-4-yl)-caprolactam, N-(1-Oxyl-2,2,6,6-tetramethylpiperidin-4-yl)-dodecylsuccinimid, 2,4,6-Tris-[N-butyl-N-(1-oxyl-2,2,6,6,-tetramethylpiperidin-4-yl]-s-triazin, N,N'-Bis(1-oxyl-2,2,6,6-tetramethylpiperidin-4-yl)-N,N'-bis-formyl-1,6-diaminohexan, 4,4'-Ethylenbis(1-oxyl-2,2,6,6-tetramethylpiperazin-3-on) und Tris-(2,2,6,6-tetramethyl-1-oxyl-piperidin-4-yl)phosphit.

Borinsäuren und -ester, wie z. B. Diphenylborinsäureanhydrid, Dimesitylborinsäure, 2-Aminoethyl-dibutylborinat, 2-Aminoethyl-diphenylborinat, Diethylmethoxyboran, Dibutylboryl-trifluormethansulfonat,

Boronsäuren und -ester, wie z. B. Butyl-boronsäure, Cyclopentyl-boronsäure, Phenylboronsäure (ggf. gemischt mit Anhydrid), Phenylboronsäureanhydrid, (4-Chlorphenyl)-boronsäure, (4-Chlorphenyl)-boronsäuredibutylester, (2,6-Dichlorophenyl)-boronsäure, 4-Bromphenylborsäure (ggf. gemischt mit Anhydrid), (3-Trifluormethylphenyl)-boronsäure, 3,5-Bis(trifluoromethyl)phenylborsäure (ggf. gemischt mit Anhydrid), (4-Methoxyphenyl)-boronsäure, (4-Methylthiophenyl)-boronsäure, [3-(Aminocarbonyl)phenyl]-boronsäure, [4-(Aminocarbonyl)phenyl]-boronsäure, 4-Carboxy-phenylborsäure, 4-Aminomethylphenylborsäure-Hydrochlorid, 2-Formylphenylboronsäure (ggf. gemischt mit Anhydrid), 3-Formylphenylboronsäure, [2-[(1,1-Dimethylethoxy)methyl]phenyl]-borsäure, 3-Aminophenylborsäure (ggf. gemischt mit Anhydrid), 4-Benzyloxyphenylborsäure, 4-Biphenylboronsäure, 4-Tolylboronsäure, (2,5-Dihexyl-1,4-phenylen)bis-boronsäure, Thiophen-2-boronsäure, Thiophen-3-boronsäure, (2,3-Dihydro-1,4-benzodioxin-6-yl)-boronsäure, (3-Bromo-2-thienyl)-boronsäure, (4-Methoxy-3-pyridinyl)-boronsäure, [2,4-Bis(1,1-dimethylethoxy)-5-pyrimidinyl]-borsäure, [2,4-Bis(phenylmethoxy)-5-pyrimidinyl]-borsäure, 4,4,4',4',5,5,5',5'-Octamethyl-2,2'-bidioxaborolan, Bis(pinacolato)dibor, Diisopropoxy-methylboran;

Borane, wie z. B. Boran-Komplexe mit Elektronendonoren, z. B. Boran-4-Methylmorpholin-, Boran-Dimethylamin-, Boran-Methylsulfid-, Boran-Pyridin-, Boran-Tetrahydrofuran-, Boran-Trimethylamin-, Boran-tert-Butylamin-Komplex, Tributylboran, Tri-s-butylboran, Triethylboran, Triethylboran-1,3-Diaminopropan-Komplex, Trimesitylboran, Triphenylboran, Triphenylboran-Triphenylphosphin-Komplex, Tris(4-methoxyphenyl)-boran-Ammoniak-Komplex, Tri-4-tolylboran, Tris(pentafluorophenyl)-bor, Diethyl-(3-pyridyl)-boran, B-Methoxydiisopinocampheylboran, (2-Borophenyl)-carbaminsäure-C-(1,1-dimethylethyl)-ester, (S,S)-1,2-Bis[(tert-butyl)methylphosphino]ethan-bis(boran), 1,2-Bis(tert-butylthio)ethanboran, 2-(4-Borophenyl)-4-chinolincarbonsäure, 2-(4-Borophenyl)-6-methyl- 4-chinolincarbonsäure, 2-Bor-1H-pyrrol-1-carbonsäure-1-(1,1-dimethylethyl)-ester, 2-Boro-1-pyrrolidincarbonsäure-1-(1,1-dimethylethyl)-ester, 2-(Diethylboryl)pyridin, 9-9-Borabicyclo-3,3,1-nonan (BBN), BBN-Dimer, 9-Methoxy-9-borabicyclo(3.3.1)nonan, B-Bromocatecholboran;

Diazaborinine, wie z. B. 1-Butyl-1,2-dihydrothieno[3,2-D][1,2,3]diazaborinin, 1-Methyl-1,2-dihydrothieno[2,3-D][1,2,3]diazaborinin, 2-Phenyl-2,3-dihydro-1,3,2-benzodiazaborinin-4(1H)-thion, 4-(Hydroxy(oxido)amino)thieno[2,3-D][1,2,3]diazaborinin-1(2H)-ol, 4-Methylthieno[3,2-D][1,2,3]diazaborinin-1(2H)-ol, Dibenzo[C,E][1,2]-azaborinin-6(5H)-ol,Thieno[3,4-D][1,2,3]diazaborinin-1(2H)-ol, Phenyl-dioxaborinan, Trimethylboroxin;

Borocane, wie z. B. 2-(3-Chloro-phenyl)-6-methyl-[1,3,6,2]dioxazaborocan, 2-(3-Fluorophenyl)-6-methyl-[1,3,6,2]dioxazaborocan,2-(4-Chloro-phenyl)-6-methyl-[1,3,6,2]dioxazaborocan, 2-(4-Fluoro-phenyl)-6-methyl-[1,3,6,2]dioxazaborocan, 2,2'-(1,3-Propandiyl-bis-(oxy))bis-1,3,2-dioxaborinan,2,2-Diphenyl-1-oxa-3-oxonia-2-borata-napthalin[(2-Hydroxybenzaldehydato-O,O')diphenylbor, 6-Methyl-2-m-tolyl-[1,3,6,2]dioxazaborocan, 6-Methyl-2-p-tolyl-[1,3,6,2]dioxazaborocan;

Diheteroatom-borole, wie z. B. 2-Phenyl-1,3,2-benzodiazaborol, 2-Phenyl-1,3,2-benzodioxaborol, 2-(4-Methylphenyl)-2,3-dihydro-1H-1,3,2-benzodiazaborol, Propylbenzodioxaborol,

Borazine, wie z. B. 2,4,6-Triethylborazin, 2,4,6-Triphenylborazin.

Davon sind Verbindungen mit Peroxid-zerstörender Wirkung bevorzugt, insbesondere die oben genannten Borverbindungen.

Das Antioxidans bzw. die Kombination von Antioxidantien wird dem Absorptionsmittel im Allgemeinen in einer Menge von 20 ppm bis 5 Gew.-%, meist 50 ppm bis 1,5 Gew.-%, vorzugsweise 100 ppm bis 1 Gew.-%, zugesetzt.

Bei der kontinuierlichen Durchführung des Entsäuerungsverfahrens wird das im Absorptionsmittelkreislauf befindliche Antioxidans nach und nach verbraucht. Es ist daher bevorzugt, dem Absorptionsmittel periodisch oder kontinuierlich Antioxidans hinzufügen, um eine wirksame Konzentration des Antioxidans im Absorptionsmittelkreislauf aufrecht zu erhalten. Die Zugabe kann durch Zugabe des Antioxidans als solchem oder einer Lösung des Antioxidans in einem geeigneten Lösungsmittel erfolgen. Es ist auch möglich, das Antioxidans mittels der Absorptionsmittelmenge einzuführen, die zum Ausgleich von Verlusten laufend ergänzt wird, die über den entsäuerten Fluidstrom und/oder die Sauergase ausgetragen werden. Um die Aufpegelung von Zersetzungsprodukten des Antioxidans im Absorptionsmittelkreislauf zu vermeiden, kann es sich anbieten, kontinuierlich oder periodisch eine Teilmenge des im Kreislauf befindlichen Absorptionsmittels auszuschleusen und/oder die Zersetzungsprodukte laufend zu entfernen, z. B. durch Filtration, Phasentrennung, Strippen, Ionenaustauscherbehandlung oder andere geeignete Verfahren.

Zur Durchführung des erfindungsgemäßen Verfahrens geeignete Vorrichtungen umfassen wenigstens eine Waschkolonne, z. B. Füllkörper, Packungs-und Bodenkolonnen, und/oder andere Absorber wie Membrankontaktoren, Radialstromwäscher, Strahlwäscher, Venturi-Wäscher und Rotations-Sprühwäscher. Die Behandlung des Fluidstroms mit dem Absorptionsmittel erfolgt dabei bevorzugt in einer Waschkolonne im Gegenstrom. Das Fluid wird dabei im Allgemeinen in den unteren Bereich und das Absorptionsmittel in den oberen Bereich der Kolonne eingespeist.

Die Temperatur des Absorptionsmittels beträgt im Absorptionsschritt im Allgemeinen etwa 40 bis 100°C, bei Verwendung einer Kolonne beispielsweise 40 bis 70°C am Kopf der Kolonne und 50 bis 100°C am Boden der Kolonne. Der Gesamtdruck beträgt im Absorptionsschritt im Allgemeinen etwa 0,5 bis 20 bar, bevorzugt etwa 0,7 bis 12 bar, besonders bevorzugt 0,7 bis 6. Ganz besonders bevorzugt beträgt liegt der Druck bei Normaldruck oder einem Druck, der vom Normaldruck um bis zu 0,2 bar abweicht. Es wird ein an sauren Gasbestanteilen armes, d. h. ein an diesen Bestandteilen abgereichertes Produktgas (Beigas) und ein mit sauren Gasbestandteilen beladenes Absorptionsmittel erhalten.

Das erfindungsgemäße Verfahren kann einen oder mehrere, insbesondere zwei, aufeinanderfolgende Absorptionsschritte umfassen. Die Absorption kann in mehreren aufeinanderfolgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d.h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP-A 0 159 495, EP-A 0 20 190 434, EP-A 0 359 991 und WO 00100271.

Gemäß einer bevorzugten Ausführungsform wird das erfindungsgemäße Verfahren so durchgeführt, dass das die sauren Gase enthaltende Fluid zunächst in einem ersten Absorptionsschritt mit dem Absorptionsmittel bei einer Temperatur von 40 bis 100°C, bevorzugt 50 bis 90°C und insbesondere 60 bis 90°C behandelt wird. Das an sauren Gasen abgereicherte Fluid wird dann in einem zweiten Absorptionsschritt mit dem Absorptionsmittel bei einer Temperatur von 30 bis 90°C, bevorzugt 40 bis 80°C und insbesondere 50 bis 80°C, behandelt. Dabei ist die Temperatur um 5 bis 20°C niedriger als in der ersten Absorptionsstufe.

Aus dem mit den sauren Gasbestandteilen beladenen Absorptionsmittel können die sauren Gasbestandteile in üblicher Weise (analog zu den nachfolgend zitierten Publikationen) in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen beinhaltet der Regenerationsschritt mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537,753 und US 4,553,984.

Die Freisetzung der sauren Gasbestandteile im Regenerationsschritt kann beispielsweise in einer Entspannungskolonne, z.B. einem senkrecht oder waagerecht eingebauten Flash-Behälter oder einer Gegenstromkolonne mit Einbauten, erfolgen. Es können mehrere Entspannungskolonnen hintereinandergeschaltet werden, in denen bei unterschiedlichen Drücken regeneriert wird. Beispielsweise kann in einer Vorentspannungskolonne bei hohem Druck, der typischerweise etwa 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder mehr Entspannungsstufen ist beschrieben in den Druckschriften US 4,537,753, US 4,553,984, EP-A 0 159 495, EP-A 0 202 600, EP-A 0 190 434 und EP-A 0 121 109.

Die letzte Entspannungsstufe kann auch unter Vakuum durchgeführt werden, das beispielsweise mittels eines Wasserdampfstrahlers, gegebenenfalls in Kombination mit einem mechanischen Vakuumerzeugungsapparat, erzeugt wird, wie beschrieben in EP-A 0 159 495, EP-A 0 202 600, EP-A 0 190 434 und EP-A 0 121 109 (US 4,551,158).

Die Erfindung wird anhand der beigefügten Figuren und der nachfolgenden Beispile näher erläutert.

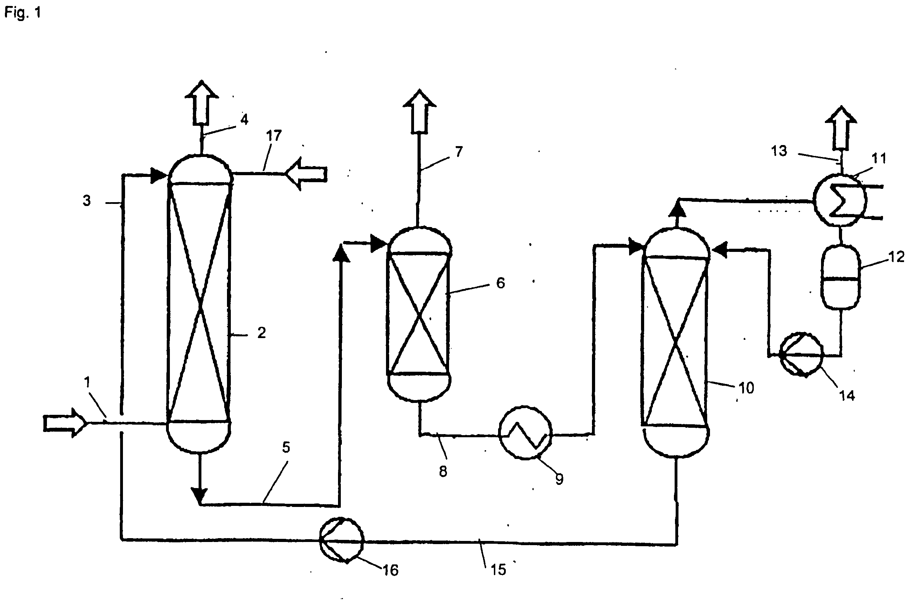

In Figur 1 ist schematisch eine Vorrichtung dargestellt, bei der die Absorptionsstufe einstufig und die Entspannungsstufe zweistufig durchgeführt werden. Das Ausgangsgas (nachfoldgend auch als Feedgas bezeichnet) wird über Leitung 1 in den unteren Bereich des Absorbers 2 eingespeist. Beim Absorber 2 handelt es sich um eine Kolonne, die mit Füllkörpern gepackt ist, um den Massen-und Wärmeaustausch zu bewirken. Das Absorptionsmittel, bei dem es sich um regeneriertes Absorptionsmittel mit einem geringen Restgehalt an sauren Gasen handelt, wird über die Leitung 3 auf den Kopf des Absorbers 2 im Gegenstrom zu dem Feedgas aufgegeben. Das an sauren Gasen abgereicherte Gas verlässt den Absorber 2 über Kopf (Leitung 4). Das mit sauren Gasen angereicherte Absorptionsmittel verlässt den Absorber 2 am Boden über Leitung 5 und wird in den oberen Bereich der Hochdruck-Entspannungskolonne 6 eingeleitet, die im Allgemeinen bei einem Druck betrieben wird, der oberhalb des CO₂-Partialdrucks des dem Absorber zugeführten Rohgases liegt. Die Entspannung des Absorptionsmittels erfolgt im Allgemeinen mit Hilfe üblicher Vorrichtungen, beispielsweise eines Stand-Regelventils, einer hydraulischen Turbine oder einer umgekehrt laufenden Pumpe. Bei der Entspannung wird der größte Teil der gelösten nicht-sauren Gase sowie ein kleiner Teil der sauren Gase freigesetzt. Diese Gase werden über Leitung 7 aus der Hochdruck-Entspannungskolonne 6 über Kopf ausgeschleust.

Das Absorptionsmittel, das nach wie vor mit dem Großteil der sauren Gase beladen ist, verlässt die Hochdruck-Entspannungskolonne über Leitung 8 und wird im Wärmetauscher 9 aufgeheizt, wobei ein kleiner Teil der sauren Gase freigesetzt werden kann. Das aufgeheizte Absorptionsmittel wird in den oberen Bereich einer Niederdruck-Entspannungskolonne 10 eingeleitet, die mit einer Füllkörperpackung ausgerüstet ist, um eine große Oberfläche zu erzielen und so die Freisetzung des CO₂ und die Einstellung des Gleichgewichts zu bewirken. In der Niederdruck-Entspannungskolonne 10 werden der größte Teil des CO₂ und das H₂S praktisch vollständig durch Flashen freigesetzt. Das Absorptionsmittel wird auf diese Weise gleichzeitig regeneriert und abgekühlt. Am Kopf der Niederdruck-Entspannungskolonne 10 ist ein Rückflusskühler 11 mit einem Auffangbehälter 12 vorgesehen, um die freigesetzten sauren Gase zu kühlen und einen Teil des Dampfes zu kondensieren. Die Hauptmenge des sauren Gases verlässt den Rückflusskühler 11 über Leitung 13. Das Kondensat wird mittels Pumpe 14 auf den Kopf der Niederdruck-Entspannungskolonne 10 zurückgepumpt. Das regenerierte Absorptionsmittel, das noch einen geringen Teil des CO₂ enthält, verlässt die Niederdruck-Entspannungskolonne 10 am Boden über Leitung 15 und wird mittels Pumpe 16 über Leitung 3 auf den Kopf des Absorbers 2 aufgegeben. Über Leitung 17 kann Frischwasser zum Ausgleich des mit den Gasen ausgetragenen Wassers eingespeist werden.

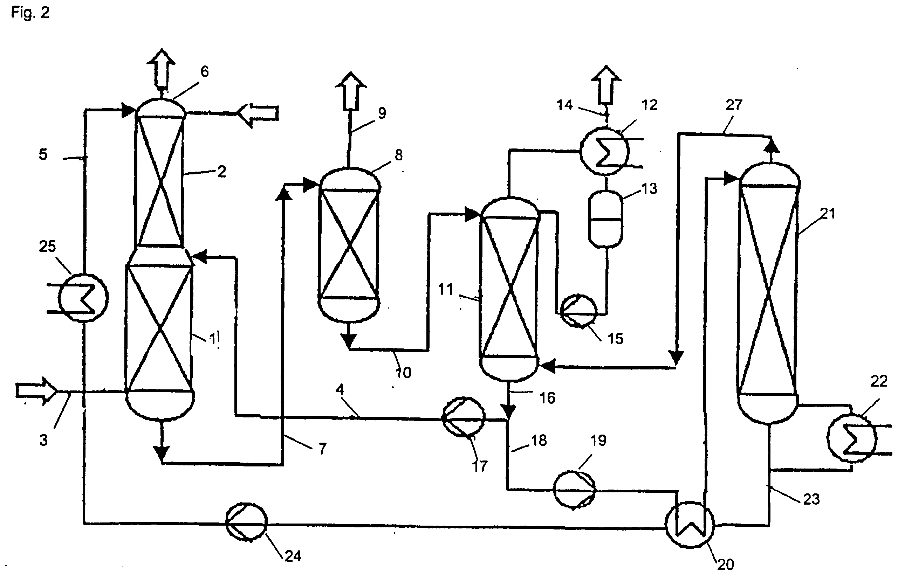

Figur 2 zeigt schematisch eine Vorrichtung zur Durchführung des erfindungsgemäßen Verfahrens unter Verwendung eines zweistufigen Absorbers und einer zweistufigen Entspannung. Der Absorber umfasst den Rohabsorber 1 und den Reinabsorber 2. Das Feedgas wird 20 über Leitung 3 in den unteren Bereich des Rohabsorbers 1 eingespeist und im Gegenstrom mit regeneriertem Absorptionsmittel behandelt, das über Leitung 4 auf den Kopf des Rohabsorbers 1 aufgegeben wird und noch etwas saure Gase enthält. Auf den Kopf des Reinabsorbers 2 wird über Leitung 5 regeneriertes Absorptionsmittel aufgegeben, das im Wesentlichen keine sauren Gase mehr enthält. Beide Teile des Absorbers enthalten eine Packung, um den Massen- und Wärmeaustausch zwischen Rohgas und Absorptionsmittel zu bewirken. Das behandelte Gas verlässt den Reinabsorber 2 über Kopf (Leitung 6). Das mit sauren Gasen beladene Absorptionsmittel wird am Boden des Rohabsorbers 1 ausgetragen und über Leitung 7 in den oberen Bereich der Hochdruck-Entspannungskolonne 8 eingespeist. Die Kolonne 8 ist mit einer Packung ausgerüstet und wird bei einem Druck betrieben, der zwischen dem Druck im Absorber und der nachfolgenden Niederdruck-Entspannungskolonne 11 liegt. Die Entspannung des mit sauren Gasen beladenen Absorptionsmittels erfolgt mit Hilfe üblicher Vorrichtungen, beispielsweise eines Stand-Regelventils, einer hydraulischen Turbine oder einer umgekehrt laufenden Pumpe. Bei der Hochdruckentspannung wird der größte Teil der gelösten nicht-sauren Gase sowie ein kleiner Teil der sauren Gase freigesetzt. Diese Gase werden über Leitung 9 aus der Hochdruck-Entspannungskolonne 8 über Kopf ausgeschleust.

Das Absorptionsmittel, das nach wie vor mit dem Großteil der sauren Gase beladen ist, verlässt die Hochdruck-Entspannungskolonne 8 über Leitung 10 und wird in den oberen Bereich der Niederdruck-Entspannungskolonne 11 eingespeist, wo der größte Teil des CO₂ und H₂S durch Flashen freigesetzt werden. Das Absorptionsmittel wird auf diese Weise regeneriert. Die Niederdruck-Entspannungskolonne 11 ist mit einer Packung ausgestattet, um eine große Oberfläche für den Wärme- und Massenübergang bereitzustellen. Am Kopf der Niederdruck-Entspannungskolonne 11 ist ein Rückflusskühler 12 mit 20 Kondensatbehälter 13 vorgesehen, um die über Kopf aus der Niederdruck-Entspannungskolonne 11 austretenden sauren Gase zu kühlen und einen Teil des Dampfes zu kondensieren. Das nicht kondensierte Gas, das die Hauptmenge der sauren Gase enthält, wird über Leitung 14 ausgetragen. Das Kondensat aus dem Kondensatbehälter 13 wird über Pumpe 15 auf den Kopf der Niederdruck-Entspannungskolonne 11 aufgegeben.

Das teilregenerierte Absorptionsmittel, das noch einen Teil der sauren Gase enthält, verlässt die Niederdruck-Entspannungskolonne 11 am Boden über Leitung 16 und wird in zwei Teilströme aufgespalten. Der größere Teilstrom wird über Pumpe 17 und Leitung 4 auf den Kopf des Rohabsorbers 1 aufgegeben, wohingegen der kleinere Teil über Leitung 18 mittels Pumpe 19 im Wärmetauscher 20 aufgeheizt wird. Das aufgeheizte Absorptionsmittel wird dann in den oberen Bereich des Strippers 21 eingespeist, der mit einer Packung ausgestattet ist. Im Stripper 21 wird der größte Teil des absorbierten CO₂ und H₂S mittels Dampf ausgestrippt, welcher im Reboiler 22 erzeugt und in den unteren Bereich des Strippers 21 eingespeist wird. Das den Stripper 21 am Boden über Leitung 23 verlassende Absorptionsmittel weist einen nur geringen Restgehalt an sauren Gasen auf. Es wird über den Wärmetauscher 20 geleitet, wobei das aus der Niederdruck-Entspannungskolonne 11 kommende, teilregenerierte Absorptionsmittel aufgeheizt wird. Das gekühlte, regenerierte Absorptionsmittel wird mittels Pumpe 24 über Wärmetauscher 25 zurück auf den Kopf des Beinabsorbers 2 gepumpt. Über Leitung 26 kann auf den Kopf des Beinabsorbers 2 Frischwasser aufgegeben werden, um das durch die Gasströme ausgetragene Wasser zu ersetzen. Das aus dem Stripper 21 über Kopf austretendes Gas wird über Leitung 27 in den unteren Bereich der Niederdruck-Entspannungskolonne 11 eingespeist.

### Beispiele

### Beispiel 1

In diesem Beispiel bestimmte man die Schallgeschwindigkeit in dem zu testenden Absorptionsmittel vor und nach Belüftung. Die Schallgeschwindigkeit eines Mediums ist abhängig von der Dichte und der Kompressibilität des Mediums. Veränderungen der chemischen Zusammensetzung eines Mediums gehen mit einer meist deutlichen Veränderung der Schallgeschwindigkeit einher. Die Änderung der Schallgeschwindigkeit ist daher ein Maß für die Zersetzung des Absorptionsmittels bei Belüftung. Die Schallgeschwindigkeit wurde mittels einer in die Probe getauchten Ultraschallsonde bestimmt werden, die die Ultraschall-Messstrecke beinhaltete.

In einem Rührkessel wurde Monoethanolamin bei 100 °C vorgelegt und mit dem zu testenden Antioxidans versetzt. Die Proben wurden mit 50 ppm Eisen(II)-oxalat versetzt, um Spuren von Eisenionen zu simulieren, die bei industriellen Anlagen herstellungsbedingt oder aufgrund von Korrosion eisenhaltiger Anlagenteile im Absorptionsmittel enthalten sind. Man leitete bei dieser Temperatur ml/min Luft durch das Adsorptionsmittel. Man bestimmte die Schallgeschwindigkeit nach 10, 20, 30, 40, 50 und 60 Stunden. Die Ergebnisse sind in Tabelle 1 angegeben.

**Tabelle 1**

| Zeit [h] | Ohne Antioxidans | 100 ppm Hydrochinon | 100 ppm HO-TEMPO | 100 ppm Diphenylborinsäureanhydrid |
|---|---|---|---|---|
| 10 | 1474,97 | 1472,69 | 1474,74 | 1473,26 |
| 20 | 1478,10 | 1476,70 | 1477,50 | 1475,27 |
| 30 | 1480,89 | 1480,28 | 1479,36 | 1478,51 |
| 40 | 1484,18 | 1484,37 | 1482,02 | 1481,37 |
| 50 | 1487,34 | 1490,31 | 1485,28 | 1483,82 |
| 60 | 1490,82 | 1494,77 | 1489,45 | 1487,32 |

Aus der Tabelle ist ersichtlich, dass die Zugabe von 1-Oxyl-2,2,6,6-tetramethylpiperidin-4-ol (HO-TEMPO) oder Diphenylborinsäureanhydrid im Vergleich zur Kontrolle ohne Antioxidans zu einer geringeren Veränderung der Schallgeschwindigkeit nach 60 Stunden führte. Die Probe mit Hydrochinon zeigte eine größere Veränderung der Schallgeschwindigkeit, d. h. einen stärkeren Grad an chemischer Zersetzung, als die Kontrolle.

### Beispiel 2

### Bestimmung der isobaren Sauerstoffaufnahme

Eine Lösung von Ethanolamin (20 mmol), Piperazin (0,4 mmol) und Eisen(II)-oxalat (0,002 mmol) in 30 ml N-Methylpyrrolidon wurde mit dem zu testenden Antioxidans (0,1 mmol) versetzt und bei Raumtemperatur in einer geschlossenen Apparatur mit 300 U/min gerührt. Die Abnahme des Gaasvolumens wurde mittels einer aufgesetzten wassergefüllten Titrationsbürette verfolgt. Die Volumenänderung wurde in Abhängigkeit von der Zeit aufgezeichnet. Die Volumenänderung nach 4200 min ist in Tabelle 2 angegeben.

**Tabelle 2**

| Antioxidans | O₂-Aufnahme nach 4200 min [ml] |
|---|---|
| Ohne | 3,6 |
| Trimethylhydrochinon | 12,2 |
| 4-Methoxyphenol | 2,2 |
| 2-Dodecyl-N-(2,2,6,6-tetramethylpiperidinyl)-succinimid | 2,7 |
| 2,6-Di-tert-butyl-4-methylphenol | 2,8 |
| 2,2,6,6-Tetramethylpiperidin-4-ol | 1,8 |
| 2,2'-Thio-bis(6-tert-butyl-4-methylphenol) | 1,6 |
| Pentaerythrit-tetrakis [3-(3,5-di-tert-butyl-4-hydroxyphenyl) propionat | 2,6 |
| 2-(2'-Hydroxy-5'-methylphenyl)-benzotriazol | 2,6 |
| N,N'-Bis-formyl-N,N'-bis(2,2,6,6-tetramethyl-4-piperidyl)-hexamethylendiamin | 1,6 |

Die Tabelle zeigt, dass Antioxidantien unterschiedlicher chemischer Struktur geeignet sind, die Sauerstoffaufnahme des Adsorptionsmittels zu verringern, mit Ausnahme des kernalkylierten Hydrochinonderivats Trimethylhydrochinon.

## Patentansprüche

1. Absorptionsmittel zum Entsäuern von Fluidströmen, umfassend wenigstens ein aliphatisches Amin und wenigstens ein nicht-hydrochinoides Antioxidans, wobei das Antioxidans ausgewählt ist unter
Hydrochinonmonoether und -ester,
hydroxylierten Thiodiphenylethern,
Benzylphosphonaten,
Estern der β-(3,5-Di-tert-butyl-4-hydroxyphenyl)-propionsäure mit ein- oder mehrwertigen Alkoholen,
2-(2'-Hydroxyphenyl)-benzotriazolen,
Nitroxylradikalen,
Borverbindungen ausgewählt unter Borinsäuren und -estern, Boronsäuren und - estern, Boranen, Diazaborininen, Borocanen, Diheteroatom-borolen und Borazinen
und
Gemischen davon.

2. Absorptionsmittel nach Anspruch 1 umfassend wenigstens ein Alkanolamin.

3. Absorptionsmittel nach Anspruch 1 umfassend Monoethanolamin (MEA), Methylaminopropylamin (MAPA), Piperazin, Diethanolamin (DEA), Triethanolamin (TEA), Diethylethanolamin (DEEA), Diisopropylamin (DIPA), Aminoethoxyethanol (AEE), Dimethylaminopropanol (DIMAP) und Methyldiethanolamin (MDEA) oder Gemische davon.

4. Verfahren zum Entsäuern eines Fluidstroms, bei dem man in wenigstens einem Absorptionsschritt den Fluidstrom mit einem Absorptionsmittel nach einem der Ansprüche 1 bis 3 in innigen Kontakt bringt.

5. Verfahren nach Anspruch 4, wobei der Fluidstrom 1 bis 80 Vol.-% Sauerstoff enthält.

6. Verfahren nach Anspruch 5, wobei der Fluidstrom
a) der Oxidation organischer Substanzen,
b) der Kompostierung oder Lagerung organischer Substanzen enthaltender Abfallstoffe, oder
c) der bakteriellen Zersetzung organischer Substanzen
entstammt.

7. Verfahren nach einem der Ansprüche 4 bis 6, wobei man das Absorptionsmittel nach Durchlaufen des Absorptionsschritts durch
a) Erwärmung,
b) Entspannung,
c) Strippen mit einem inerten Fluid
oder eine Kombination zweier oder aller dieser Maßnahmen regeneriert und dann in einen Absorptionsschritt zurückführt.

8. Verfahren nach einem der Ansprüche 4 bis 7, wobei man zu dem Absorptionsmittel periodisch oder kontinuierlich Antioxidans hinzufügt.

## Claims

1. An absorption medium for deacidifying fluid streams, which comprises at least one aliphatic amine and at least one non-hydroquinoid antioxidant, the antioxidant being selected from
hydroquinone monoethers and monoesters,
hydroxylated thiodiphenyl ethers,
benzylphosphonates,
esters of β-(3,5-di-tert-butyl-4-hydroxyphenyl)propionic acid with monohydric or polyhydric alcohols, 2-(2'-hydroxyphenyl)benzotriazoles,
nitroxyl radicals,
boron compounds selected from borinic acids and borinic esters, boronic acids and boronic esters, boranes, diazaborinines, borocanes, diheteroatom boroles and borazines
and
mixtures thereof.

2. The absorption medium according to claim 1 comprising at least one alkanolamine.

3. The absorption medium according to claim 1 comprising monoethanolamine (MEA), methylaminopropylamine (MAPA), piperazine, diethanolamine (DEA), triethanolamine (TEA), diethylethanolamine (DEEA), diisopropylamine (DIPA), aminoethoxyethanol (AEE), dimethylaminopropanol (DIMAP) and methyldiethanolamine (MDEA) or mixtures thereof.

4. A process for deacidifying a fluid stream in which, in at least one absorption step, the fluid stream is brought into intimate contact with an absorption medium according to one of claims 1 to 3.

5. The process according to claim 4, wherein the fluid stream comprises from 1 to 80% by volume of oxygen.

6. The process according to claim 5, wherein the fluid stream originates from
a) the oxidation of organic substances,
b) the composting or storage of waste matter comprising organic substances, or
c) the bacterial decomposition of organic substances.

7. The process according to one of claims 4 to 6, wherein the absorption medium, after it passes through the absorption step, is regenerated by
a) heating,
b) expansion,
c) stripping with an inert fluid
or a combination of two or all of these measures, and is then recirculated to an absorption step.

8. The process according to one of claims 4 to 7, wherein antioxidant is periodically or continuously added to the absorption medium.

## Revendications

1. Absorbant pour désacidifier des flux de fluides, comprenant au moins une amine aliphatique et au moins un antioxydant non hydroquinoïde, l'antioxydant étant choisi parmi les monoéthers d'hydroquinone et les monoesters d'hydroquinone, les thiodiphényléthers hydroxylés, les benzylphosphonates, les esters de l'acide β-(3,5-di-tert-butyl-4-hydroxyphényl)-propionique avec des alcools monovalents ou polyvalents, les 2-(2'-hydroxyphényl)-benzotriazoles, les radicaux nitroxyle, les composés du bore choisis parmi les acides boriniques et les esters boriniques, les acides boroniques et les esters boroniques, les boranes, les diazaborinines, les borocanes, les dihétéroatome-boroles et les borazines et leurs mélanges.

2. Absorbant selon la revendication 1 comprenant au moins une alcanolamine.

3. Absorbant selon la revendication 1, comprenant de la monoéthanolamine (MEA), de la méthylaminopropylamine (MAPA), de la pipérazine, de la diéthanolamine (DEA), de la triéthanolamine (TEA), de la diéthyléthanolamine (DEEA), de la diisopropylamine (DIPA), de l'aminoéthoxyéthanol (AEE), du diméthylaminopropanol (DIMAP) et de la méthyldiéthanolamine (MDEA) ou leurs mélanges.

4. Procédé pour désacidifier un flux de fluides, dans lequel on amène en contact intime dans au moins une étape d'absorption le flux de fluides avec un absorbant selon l'une quelconque des revendications 1 à 3.

5. Procédé selon la revendication 4, le flux de fluides contenant 1 à 80 % en volume d'oxygène.

6. Procédé selon la revendication 5, le flux de fluides provenant
a) de l'oxydation de substances organiques,
b) du compostage ou de l'entreposage de déchets contenant des substances organiques, ou
c) de la décomposition bactérienne de substances organiques.

7. Procédé selon l'une quelconque des revendications 4 à 6, l'absorbant étant régénéré après le passage par l'étape d'absorption, par
a) chauffage,
b) détente,
c) extraction avec un fluide inerte
ou une combinaison de deux ou de toutes ces mesures, puis recyclé dans une étape d'absorption.

8. Procédé selon l'une quelconque des revendications 4 à 7, un antioxydant étant ajouté périodiquement ou en continu à l'absorbant.
